# EUROPEAN PATENT APPLICATION

(11) **EP 3 647 576 A1**
(43) Date of publication of application: **06.05.2020**
(21) Application number: 19199197.5
(22) Date of filing: 24.09.2019
(51) Int. Cl.: F02K 3/06

(54) **GAS TURBINE ENGINE**

(30) Priority: 02.11.2018 GB 201817937
(71) Applicant: Rolls-Royce plc, London N1 9FX (GB)
(72) Inventor: Cooper, Joseph, Derby, Derbyshire DE24 8BJ (GB); Rees, Geraint, Derby, Derbyshire DE24 8BJ (GB)
(74) Representative: Rolls-Royce plc

(57) **Abstract**

A gas turbine engine (10) for an aircraft comprising: an engine core (11) comprising a turbine (19), a compressor (14), and a core shaft (26) connecting the turbine (19) to the compressor (14), wherein the engine core (11) extends along a rotational axis (9), and has an engine core diameter (46) perpendicular to the rotational axis (9); and a fan (23) comprising a plurality of fan blades (25) extending radially from the rotational axis (9), wherein the fan (23) has a fan diameter (48) perpendicular to the rotational axis (9), wherein a ratio of the engine core diameter (46) to the fan diameter (48) is between 1:1.7 and 1:2.2.

## Description

The present disclosure relates to a gas turbine engine. In particular, but not exclusively, the present disclosure relates to a gas turbine engine for an aircraft.

Gas turbine aircraft engines comprise a propulsive fan arranged downstream of an air intake. The fan is surrounded by a fan case, and typically generates two separate airflows. A first airflow is received by a core of the engine, and a second airflow is received in a bypass duct. The core comprises one or more compressors, a combustor, and one or more turbines. The bypass duct is defined around the core.

In use, the core airflow is compressed by the compressors, mixed with fuel and combusted in the combustor. The combustion products are expanded through the turbine stages and exhausted through a core nozzle. The turbines drive the compressor stages and propulsive fan through one or more interconnecting shafts.

Typically, whilst some thrust is provided by the core nozzle, the majority of the thrust generated by the engine is provided by the propulsive fan, through the bypass duct. Propulsive efficiency of the gas turbine can be improved by increasing the bypass ratio (the ratio of the air mass flow through the bypass duct to the air mass flow through the core). The bypass ratio is related to the size of the fan which in turn is limited by the rotation speed of the fan, as a large fan rotating at high speed may experience unwanted distortion of the fan, and other effects.

If the fan is driven by a reduction gearbox, it can be driven at slower speeds than the shafts from the turbines. This enables the fan to be increased in size, facilitating an increase of the bypass duct ratio.

According to a first aspect there is provided a gas turbine engine for an aircraft comprising: an engine core comprising a turbine, a compressor, and a core shaft connecting the turbine to the compressor, wherein the engine core extends along an rotational axis, and has an engine core diameter perpendicular to the rotational axis; and a fan, comprising a plurality of fan blades extending radially from the rotational axis, wherein the fan has a fan diameter perpendicular to the rotational axis, wherein a ratio of the engine core diameter to the fan diameter is between 1:1.7 and 1:2.2.

Where the ratio of engine core diameter to fan diameter is between 1:1.7 and 1:2.2, the bypass ratio of the engine is increased, improving the efficiency of the engine, whilst also maintaining reliability (and hence in-service lifetime) of the engine.

The ratio of the engine core diameter to the fan diameter may be between 1:1.7 and 1:2, 1.7 and 1.9, or 1.7 and 1.8.

The fan diameter may be at least 2.2 metres. A large diameter fan provides a high bypass ratio, and increases the efficiency of the engine.

According to a second aspect, there is provided gas turbine engine for an aircraft comprising: an engine core comprising a turbine, a compressor, and a core shaft connecting the turbine to the compressor, wherein the engine core extends along a rotational axis, and has an engine core diameter perpendicular to the rotational axis; and a fan comprising a plurality of fan blades extending radially from the rotational axis, wherein the fan has a fan diameter perpendicular to the rotational axis, wherein: a ratio of the engine core diameter to the fan diameter is between 1:1.65 and 1:2.2; and the fan diameter is at least 2.2 metres.

Where the ratio of engine core diameter to fan diameter is between 1:1.65 and 1:2.2, the bypass ratio of the engine is increased, improving the efficiency of the engine, whilst also maintaining reliability (and hence in-service lifetime) of the engine. Furthermore, a large diameter fan provides a high bypass ratio, and increases the efficiency of the engine.

The ratio of the engine core diameter to the fan diameter may be between 1:1.65 and 1:1.8.

In either aspect, the fan diameter may be greater than or equal to 2.5 metres.

Alternatively, in either aspect, the fan diameter may be greater than or equal to 3.3 metres. The fan diameter may be less than or equal to 3.7 metres.

The gas turbine engine may generate a maximum thrust of up to 225kN. Alternatively, the gas turbine engine may generate a maximum thrust of 310kN or more.

In either aspect, the engine core diameter may vary along the rotational axis and the ratio of the engine core diameter to the fan diameter may comprise the ratio of a maximum engine core diameter to the fan diameter.

The gas turbine engine of either aspect may further comprise a gearbox that receives an input from the core shaft and outputs drive to the fan so as to drive the fan at a lower rotational speed than the core shaft. The gearbox may be an epicyclic gearbox. Use of a reduction gearbox enables the fan to be driven at slower speeds than the core shaft, thus enabling the fan diameter to be increased.

The gearbox may comprise: a central sun gear coupled to the core shaft, and arranged to rotate around the rotational axis; a planet gear carrier arranged to rotate about the rotational axis and coupled to the fan; a plurality of planet gears mounted on the planet gear carrier, the planet gears radially outwards of and intermeshing with the sun gear; and a ring gear radially outward of and intermeshing with the planet gears, and held stationary with respect to the sun gear. The planet carrier may be arranged to hold the planet gears in a fixed spacing relative to each other, and to enable each planet gear to rotate about its own axis, such that rotation of the sun gear drives rotation of the planet gears about their own axes, causing precession of the planet gears about the sun gear, in synchronicity, to drive rotation of the planet carrier.

In either aspect, the turbine may be a first turbine, the compressor may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

The gas turbine engine of either aspect may further comprise a fan case arranged around the fan and extending along the rotational axis. The engine core may be comprised in a first module of the gas turbine engine, the fan may be comprised in a second module of the gas turbine engine, and the fan casing may be comprised in a third module of the gas turbine engine. One or more of the first, second and third modules may be interchangeable with different first, second or third modules.

A modular engine allows the larger components, such as the fan case, to be shipped separately to the smaller components, such as the engine core. Furthermore, using interchangeable modules allows the larger components that require less frequent maintenance, such as the fan case, to be kept with aircraft or in an aircraft maintenance facility, whilst the core, which requires more regular maintenance and is easier to ship, can be swapped with a different core, to keep the aircraft in service, whilst still allowing servicing.

The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm (around 90 inches), 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds), for example in the range of from 0.28 to 0.31 or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of from 13 to 16, or 13 to 15, or 13 to 14. The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 225kN (around 50,000Ibf), 250kN, 300kN, 310kN (around 70,000Ibf), 350kN, 375kN (around 84,000lbf), 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance- between top of climb and start of descent. Cruise conditions thus define an operating point of, the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000ft (11582m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000ft (10668m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4A** illustrates a schematic view of the gas turbine engine of Figure 1, illustrating the separate modules of the engine; and
**Figure 4B** illustrates the modules of Figure 4A, in exploded form.

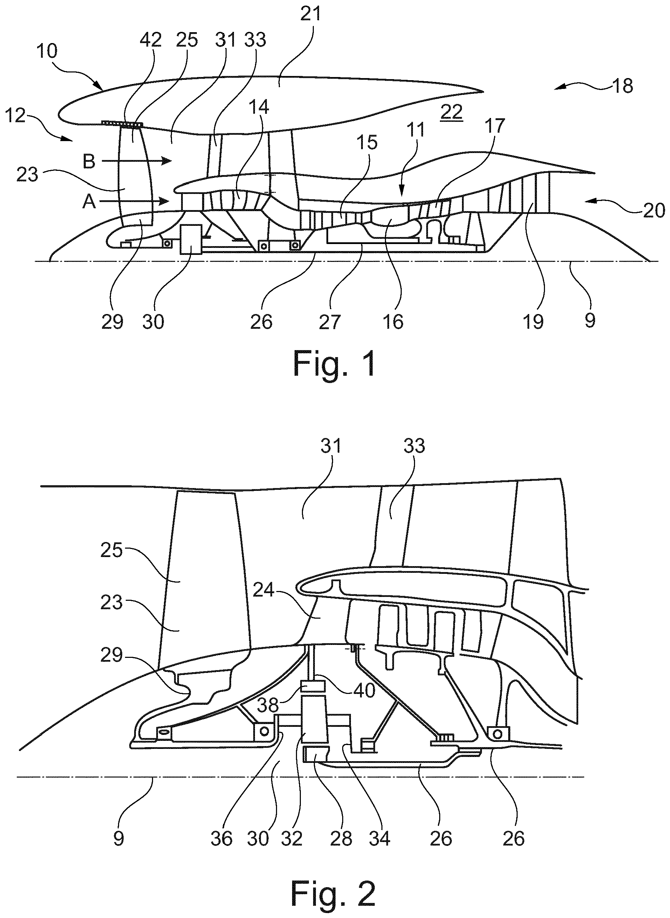

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. The fan 23 is attached to and driven by the low pressure turbine 19 via a shaft 26 and an epicyclic gearbox 30.

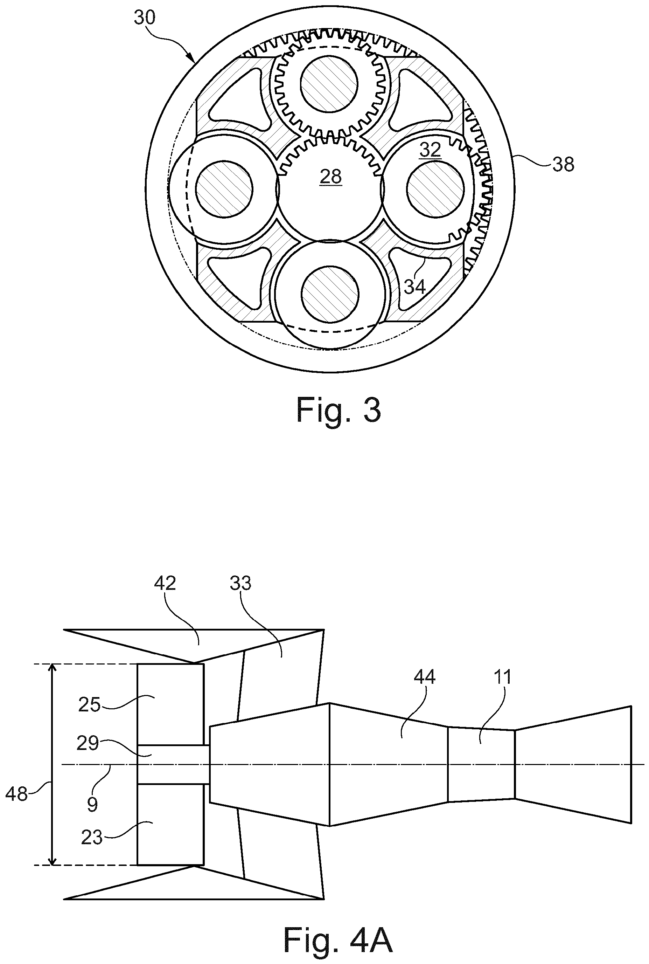

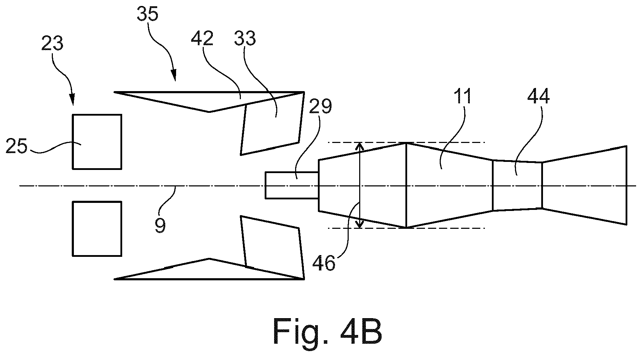

The propulsive fan 23 includes a plurality of fan blades 25 extending radially outward from a hub 29 mounted on an output shaft of the gearbox 30. The radially outer tips of the fan blades 25 are surrounded by a fan casing 42, which extends downstream behind the fan 23. The fan casing 42 will be discussed in more detail below, in relation to Figures 4A and 4B. Behind the fan casing 42, in the axial flow direction (downstream), a nacelle 21 surrounds the engine core 11. The fan casing 42 and nacelle 21 define a bypass duct 22 and a bypass exhaust nozzle 18 around the engine core 11.

The bypass airflow B flows through the bypass duct 22. At an upstream end of the bypass duct 22, adjacent an intake 31 of the bypass duct 22, and downstream of the fan 23, a plurality of outlet guide vanes 33 extend radially between the engine core 11 and the fan casing 42. The outlet guide vanes 33 reduce swirl and turbulence in the bypass airflow B, providing improved thrust.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. The gas turbine engine 10 may also be arranged in the "pusher" configuration, in which the fan 23 is located downstream of the core 11. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

Figure 4A schematically illustrates the constituent components of the gas turbine engine 10 of Figures 1 to 3, with the nacelle 21 removed. As shown in Figure 4B, the gas turbine engine 10 is formed of a number of separate modules 11, 23, 35. The engine 10 may thus be considered modular.

The first module is an engine core module 11. This typically includes the gearbox 30, low pressure compressor 14, high-pressure compressor 15, combustion equipment 16, high-pressure turbine 17, and low pressure turbine 19. The engine core module 11 can also be referred to as a propulsor. The second module, also referred to as the fan module 23, includes the fan blades 25. The third module 35 includes the fan case 42.

The outlet guide vanes 33 extend inwardly from the fan case 42, and typically form part of the fan case module 35. The hub 29 and gearbox 30 may be part of the fan module 23 or the engine core module 11. The gearbox 30 may additionally be configured as a separable module in its own right or part of the fan case module 35.

As shown in Figure 4B, the fan module 35 can be removed from the engine core module 11, and the engine core module 11 and fan case module 35 can be separated from one another. This facilitates easy delivery and transport of the engine 10, as the separate modules 11, 23 35. Any suitable connections may be used to join the modules. For example, the fan case module 35 may be bolted to the engine core 11 by bolted connections at the radially inner ends of the outlet guide vanes 33. Further connecting/support struts may also be provided between the fan case 42 and the engine core 11.

The modules 11, 23, 35 may be interchangeable, such that, for example, a gas turbine engine 10 that includes a first engine core module 11, a first fan module 23 and a first fan case module 35 may have the first engine core module 11 removed, and replaced with a second engine core module 11 having the same design. The second engine core module 11 may have the same design at least with respect to the interfaces between the modules.

It will be appreciated that any one or more of the modules 11, 23, 35 may be interchanged. There may be a plurality of engine core modules 11, a plurality of fan modules 23 and a plurality of fan case modules 35. An engine 10 may include any one of each of the modules, rather than each engine 10 comprising dedicated sets of modules that can only be used together (i.e. the first engine core module 11 only works with the first fan module 23 and the first fan case module 35, the second engine core module 11 only works with the second fan module 23 and the second fan case module 35, and the like).

The interchangeability of modules allows the first engine core module 11 to be serviced, replaced or repaired, whilst the engine 10 remains functional. The engine core module 11 is smaller than the fan case 42, and also requires more regular maintenance. Therefore, by using a modular engine with interchangeable modules, the smaller, easier to transport parts, are shipped more easily, whilst the larger parts are kept with the aircraft, or in an aircraft maintenance facility.

In some cases, the nacelle 21 remains with the aircraft. In other instances, the whole or part of the nacelle 21, such as the region around the air intake, could be removed from the aircraft with the fan case module 35.

The engine core 11 is encased in an engine core housing 44. The engine core 11 has a radius measured from the centre line of the engine 10 (the principal axis 9), to the engine core housing 44, in a radial direction perpendicular to the housing. The diameter of the engine core 11 is twice the radius.

As shown in Figures 4A and 4B, the diameter of the engine core 11 varies along the axial length of the engine 10. The engine core 11 has a maximum diameter 46 at a point along its length. In one example, the maximum diameter 46 may be in the region of the intermediate pressure compressor 15, but this need not necessarily be the case.

The fan 23 also has a radius. The radius of the fan 23 is measured between the engine centreline 9 and the tip of a fan blade 25 at its leading edge. As with the engine core 11, the diameter 48 of the fan 23 is twice the radius.

The size of the engine 10 is described by the diametral ratio of the engine 10, which is the ratio of the maximum engine core diameter 46 to the fan diameter 48.

The diametral ratio of the engine 10 discussed above and shown in the Figures may be between 1:1.65 and 1:2.2. For example, the diametral ratio may be between 1:1.7 and 1:2.2, or may further be between 1:1.65 and 1:1.8 or 1:1.7 and 1:1.8, or indeed any other range defined and/or claimed herein.

The fan diameter 48 may be above 90 inches (2.286 metres). For example, the fan diameter 48 may be around 101 inches (2.565 metres), or above 130 inches (3.302 metres). For example, the fan diameter 48 may be between 130 inches and 145 inches (3.683 metres). For example, the fan diameter 48 may be on the order of 140 inches (3.556 metres).

When the diametric ratio is within any of the ranges discussed above, the engine 10 may be arranged to generate a maximum thrust of around 50,000lbf (222kN). In alternative examples, the engine 10 may be arranged to generate a maximum thrust of over 70,000lbf (311kN). In one such example, the engine 10 may be arranged to generate in the range of from 80,000lbf thrust (356kN) to 90,000lbf thrust (400kN).

The diametral ratios discussed above may be applicable, however, to any fan diameter 48, and any thrust level. The thrust level will be dependent, at least in part, on the fan diameter 48.

The efficiency of a gas turbine engine 10 can be characterised by the bypass ratio. The bypass ratio is the ratio of the air mass flow through the bypass duct, flow B, to the air mass flow through the core, flow A. As the bypass ratio increases, the proportion of the thrust generated by the core engine 11 decreases.

Under mid-cruise conditions (when the engine is flying a stable altitude and thrust levels), and with the diametral ratios discussed above, as an example the engine 10 can have a bypass ratio of 14.5 or more, or indeed any other bypass ratio described and/or claimed herein.

Although the engine 10 has been described in relation to a modular geared gas turbine engine 10 for an aircraft, it may in some cases be used on any suitable gas turbine engine, including non-geared and/or non-modular engines.

Furthermore, the architecture of the engine 10 discussed above is given by way of example only. The engine 10 may have any suitable architecture. For example, there may be any number of compressor stages, turbine stages, core shafts and the like.

The engine core module 11 may include features on the outside of the housing 44, or protruding from the housing 44. These protruding features may be, for example, mounting the engine core 11 to the fan case module 35 and support structure of the engine, fixing outlet guide vanes 33 to the engine core 11, and features associated with accessories of the engine and the like. The protruding features may be integral with the engine core 11, or removable, and are typically discontinuous along the length and/or around the circumference of the engine core 11. The protruding features are typically used when the engine is operational. Whilst the features may be used for storage or transportation, they are not provided solely for this purpose. The core diameter 46 is measured from the core housing 44, and does not include such features.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A gas turbine engine (10) for an aircraft comprising:
an engine core (11) comprising a turbine (19), a compressor (14), and a core shaft (26) connecting the turbine (19) to the compressor (14), wherein the engine core (11) extends along a rotational axis (9), and has an engine core diameter (46) perpendicular to the rotational axis (9); and
a fan (23) comprising a plurality of fan blades (25) extending radially from the rotational axis (9), wherein the fan (23) has a fan diameter (48) perpendicular to the rotational axis (9),
wherein a ratio of the engine core diameter (46) to the fan diameter (48) is between 1:1.7 and 1:2.2.

2. The gas turbine engine (10) of claim 1, wherein the ratio of the engine core diameter (46) to the fan diameter (48) is between 1:1.7 and 1:1.8.

3. The gas turbine engine (10) of claim 1 or claim 2, wherein the fan diameter (48) is at least 2.2 metres.

4. A gas turbine engine (10) for an aircraft comprising:
an engine core (11) comprising a turbine (19), a compressor (14), and a core shaft (26) connecting the turbine (19) to the compressor (14), wherein the engine core (11) extends along a rotational axis (9), and has an engine core diameter (46) perpendicular to the rotational axis (9); and
a fan (23) comprising a plurality of fan blades (25) extending radially from the rotational axis (9), wherein the fan (23) has a fan diameter (48) perpendicular to the rotational axis (9),
wherein:
a ratio of the engine core diameter (46) to the fan diameter (48) is between 1:1.65 and 1:2.2; and
the fan diameter (48) is at least 2.2 metres.

5. A gas turbine engine (10) as claimed in claim 4, wherein the ratio of the engine core diameter (46) to the fan diameter (48) is between 1:1.65 and 1:1.8.

6. A gas turbine engine (10) as claimed in any of claims 3 to 5, wherein the fan diameter (48) is greater than or equal to 2.5 metres.

7. A gas turbine engine (10) as claimed in any of claims 3 to 5, wherein the fan diameter (48) is greater than or equal to 3.3 metres.

8. A gas turbine engine (10) as claimed in claim 7, wherein the fan diameter (48) is less than or equal to 3.7 metres.

9. A gas turbine engine (10) as claimed in any preceding claim wherein the gas turbine engine generates a maximum thrust up to 225kN.

10. A gas turbine engine (10) as claimed in any of claims 1 to 8, wherein the gas turbine engine (10) generates a maximum thrust of 310kN or more.

11. A gas turbine engine (10) according to any preceding claim, wherein the engine core diameter (46) varies along the rotational axis (9) and the ratio of the engine core diameter (46) to the fan diameter (48) comprises the ratio of a maximum engine core diameter (46) to the fan diameter (48).

12. A gas turbine engine (10) according to any preceding claim, further comprising a gearbox (30) that receives an input from the core shaft (26) and outputs drive to the fan (23) so as to drive the fan (23) at a lower rotational speed than the core shaft (26).

13. A gas turbine engine (10) according to claim 12, wherein the gearbox (30) is an epicyclic gearbox.

14. A gas turbine engine (10) according to claim 13, wherein the gearbox (30) comprises:
a central sun gear (28) coupled to the core shaft (26), and arranged to rotate around the rotational axis (9);
a planet gear carrier (34) arranged to rotate about the rotational axis (9) and coupled to the fan (23);
a plurality of planet gears (32) mounted on the planet gear carrier (34), the planet gears (32) radially outwards of and intermeshing with the sun gear (28); and
a ring gear (38) radially outward of and intermeshing with the planet gears (32), and held stationary with respect to the sun gear (28)
wherein the planet carrier (34) is arranged to hold the planet gears (32) in a fixed spacing relative to each other, and to enable each planet gear (32) to rotate about its own axis, such that rotation of the sun gear (28) drives rotation of the planet gears (32) about their own axes, causing precession of the planet gears (32) about the sun gear (28), in synchronicity, to drive rotation of the planet carrier (34).

15. A gas turbine engine (10) according to any preceding claim, wherein:
the turbine is a first turbine (19), the compressor is a first compressor (14), and the core shaft is a first core shaft (26);
the engine core (11) further comprises a second turbine (17), a second compressor (15), and a second core shaft (27) connecting the second turbine (17) to the second compressor (15); and
the second turbine (17), second compressor (15), and second core shaft (27) are arranged to rotate at a higher rotational speed than the first core shaft (26).

16. A gas turbine engine (10) according to any preceding claim, comprising a fan case (42) arranged around the fan (23) and extending along the rotational axis (9),
wherein:
the engine core (11) is comprised in a first module of the gas turbine engine (10), the fan (23) is comprised in a second module of the gas turbine engine (10), and the fan case (42) is comprised in a third module (35) of the gas turbine engine (10);
one or more of the first, second and third modules (11, 23, 35) are interchangeable with different first, second or third modules.
